# EUROPEAN PATENT SPECIFICATION

(11) **EP 2 525 307 B1**
(45) Date of publication and mention of the grant of the patent: **03.01.2018**
(21) Application number: 10843230.3
(22) Date of filing: 14.01.2010
(51) Int. Cl.: G06Q 10/00, G06Q 50/00

(54) **CUSTOMER SERVICE SYSTEM OF HOME APPLIANCES USING SMART GRID**
KUNDENDIENSTSYSTEM FÜR HAUSGERÄTE MIT INTELLIGENTEM STROMNETZ
SYSTÈME DE SERVICE APRÈS-VENTE POUR APPAREILS DOMESTIQUES UTILISANT UN RÉSEAU INTELLIGENT

(43) Date of publication of application: 21.11.2012
(73) Proprietor: LG Electronics Inc., Seoul 150-721 (KR)
(72) Inventor: KANG, Sung-Su, Gyoungsangnam-do 641-711 (KR)
(74) Representative: Vossius & Partner Patentanwälte Rechtsanwälte mbB
(86) International application number: PCT/KR2010/000229
(87) International publication number: WO 2011/087164

(56) References cited:
- WO-A1-01/52515
- WO-A1-03/049314
- KR-A- 20020 013 030
- KR-A- 20040 017 695
- KR-A- 20050 071 761
- KR-B1- 100 436 090
- KR-B1- 100 632 924
- US-A1- 2002 128 853

## Description

### TECHNICAL FIELD

The present disclosure relates to a customer service system for home appliances using a smart grid.

### BACKGROUND ART

Generally, electricity is supplied to home appliances in the order of a power plant operated by a public or private company, a power transmission line, and a power distribution line.

That is, power is supplied not by a distributed structure but by a centralized structure. In order words, power is supplied through a radial structure expanding from the center to the periphery. This is not a customer-centered structure but a supplier-centered one-way structure.

Therefore, residential customers can get only limited information about prices of electricity from a power exchange. Furthermore, since electricity prices are practically fixed, it is difficult for customers to buy electricity at desired prices.

Thus, much research is being performed on smart grids to solve the above-mentioned problems and use energy efficiently.

A smart grid is a next-generation power and management system developed by applying information technology (IT) to the existing power grid for improving energy efficiency by realizing two-way and real-time information exchange between power providers and consumers.

In addition to unilateral power supply from a power supply source to a network to which home appliances are connected, two-way communication is necessary between the power supply source and the network to realize a smart grid for residential customers. In addition, new devices are necessary for such two-way communication.

WO 01/52515 discloses an appliance control system having features as recited in the preamble of claim 1. Related technology is shown in KR 2002 0013030 A or US 2002/128853 A1.

### DISCLOSURE OF THE INVENTION

### TECHNICAL PROBLEM

Embodiments provide a customer service system by which a service request for a home appliance can be easily registered using a smart grid. The invention is specified in the claims.

In one embodiment, a customer service system for a home appliance using a smart grid is provided, the customer service system including: an advanced metering infrastructure (AMI) configured to measure and display power information in real time while communicating with a power supply source in two ways; an energy management system (EMS) connected to the AMI for supplying power to the home appliance based on external power information; a customer service center providing a customer service for the home appliance and communicating with the EMS in two ways; and a communication adapter connecting the home appliance and the EMS while allowing power supply and two-way communication, wherein the home appliance includes a service button, and if the service button is manipulated, information for requesting a customer service is transmitted to the customer service center through the communication adapter and the EMS.

### ADVANTAGEOUS EFFECTS

According to an embodiment, power is supplied to a home appliance through a smart grid connected to a customer service center for two-way communication.

The home appliance includes: a communication adapter for communicating with the smart grid: and a service button at a side thereof to send information about an abnormal operation of the home appliance to the customer service center through the communication adapter and the smart grid.

Therefore, if the home appliance operates abnormally, a customer service request can be sent to the customer service center only by pressing the service button.

When the information about an abnormal operation of the home appliance is sent to the customer service center, information about the identification and operational states of the home appliance is also sent to the customer service center. Thus, the customer service center can check the home appliance and the abnormal operation of the home appliance based on the received information.

In addition, the customer service center sends information about reception of the customer service request to the home appliance through the smart grid, and the reception information is displayed on a display unit of the home appliance. Therefore, a customer can see the reception information and easily receive a customer service.

### BRIEF DESCRIPTION OF THE DRAWINGS

Fig. 1 is a schematic view illustrating the structure of a smart grid.
Fig. 2 is a schematic view illustrating a configuration for supply power to home appliances according to an embodiment.
Fig. 3 is a view illustrating a home appliance according to an embodiment.
Fig. 4 is a view illustrating a service system for the home appliance illustrated in Fig. 3.
Fig. 5 is a flowchart for explaining processes of receiving a customer's service request in the service system illustrated in Fig. 4.
Fig. 6 is a view illustrating another home appliance according to an embodiment.
Fig. 7 is a view illustrating a service system for the home appliance illustrated in Fig. 6.
Fig. 8 is a flowchart for explaining processes of receiving a customer's service request in the service system illustrated in Fig. 7.
Fig. 9 is a view illustrating another home appliance according to an embodiment.
Fig. 10 is a view illustrating a service system for the home appliance illustrated in Fig. 9.
Fig. 11 is a flowchart for explaining processes of receiving a customer's service request in the service system illustrated in Fig. 10.
Fig. 12 is a view illustrating another home appliance according to an embodiment.
Fig. 13 is a view illustrating a service system for the home appliance illustrated in Fig. 12.
Fig. 14 is a flowchart for explaining processes of receiving a customer's service request in the service system illustrated in Fig. 13.

### MODE FOR CARRYING OUT THE INVENTION

Reference will now be made in detail to the embodiments of the present disclosure, examples of which are illustrated in the accompanying drawings. However, the spirit and scope set forth in the present disclosure are not limited to the embodiments. Those of ordinary skill in the art will easily propose other embodiments within the spirit and scope.

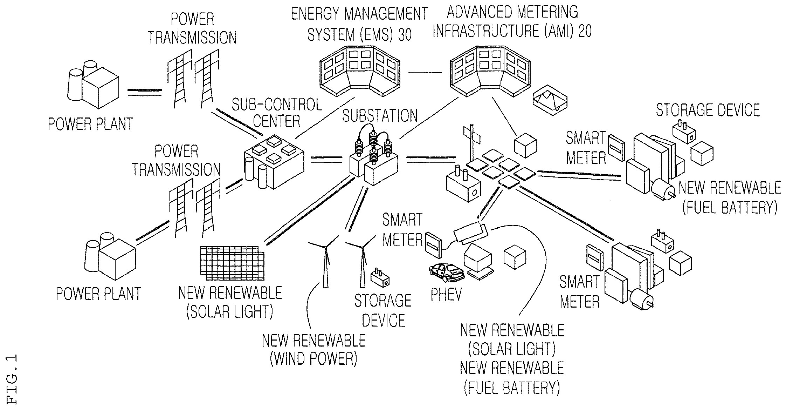

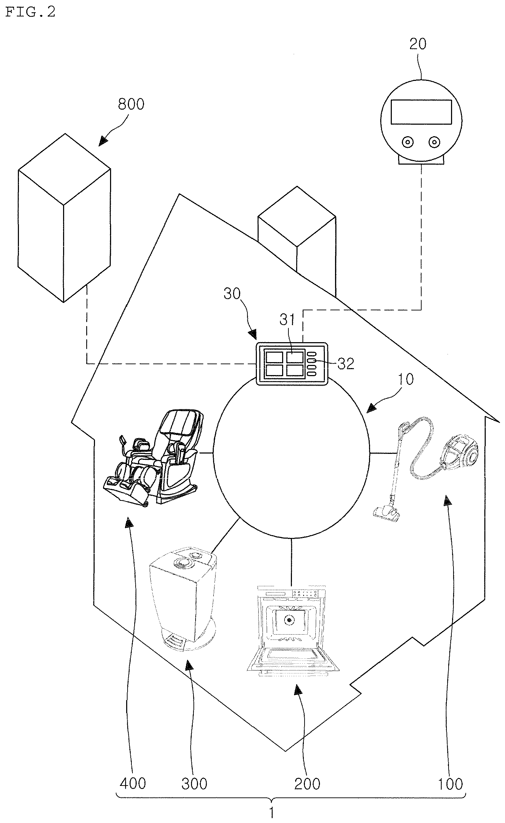

Fig. 1 is a schematic view illustrating the structure of a smart grid, and Fig. 2 is a schematic view illustrating a configuration for supply power to home appliances according to an embodiment.

Referring to the drawings, the smart grid includes a plurality of power plants and a plurality of power generating facilities such as a solar cell station, a wind power plant, and a fuel cell station. Electricity generated by the power plants and power generating facilities are transmitted to a sub-control center.

The sub-control center stores the electricity and transmits the electricity to a substation where the electricity is adjusted in voltage for being distributed to consumers such as residential customers and manufacturing plants.

In addition, an advanced metering infrastructure (AMI) 20 is used to measure the amount of electricity consumed by consumers such as residential customers and offices and calculate electricity charges. In the smart grid, an energy management system (EMS) 30 is connected to the AMI 20 for real-time power management and real-time power consumption prediction for consumers.

The AMI 20 of the smart grid is backbone technology for integrating consumers based on an open architecture. The AMI 20 provides consumers with the ability to use electricity efficiently and power providers with the ability to detect problems on their systems and operate them efficiently.

That is, in the smart grid, the AMI 20 provides a reference so that all electric devices can be connected to each other regardless of manufactures of the electric devices, and a real-time price signal of an electricity market is transmitted through the AMI 20 to the EMS 30 provided in a consumer.

In addition, the EMS 30 distributes electricity to a plurality of electric devices provided in the consumer and communicates with the electric devices for detecting power information of the electric devices and performing a power information processing process such as a power consumption or electricity charge limit setting process so as to reduce energy consumption and costs.

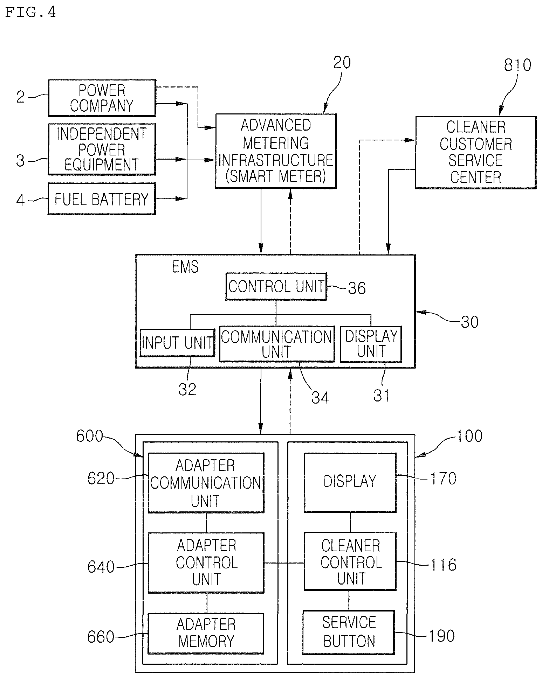

For this, the EMS 30 includes a control unit 36 (refer to Fig. 4), an input unit 32, a communication unit 34 (refer to Fig. 4), and a display unit 31. These units will be described below in detail.

As shown in Fig. 2, the EMS 30 mainly supplies electricity to home appliances 1 provided in the consumer.

For this, an energy supply network 10 is constructed in the consumer. The energy supply network 10 includes the AMI 20 for real-time measurements of power, electricity rates, power consumption peak times; and the EMS 30 capable of communicating with both the AMI 20 and the home appliances 1 to transmit and receive control signals for distributing electricity to the home appliances 1.

The EMS 30 includes: the display unit 31 for displaying current electricity consumption states and environments (such as temperature and humidity); the input unit 32 that can be manipulated by a user; the communication unit 34 for communication with the home appliances 1 through radio waves or wires such as PLC; and the control unit 36 for processing control signals.

In addition, a customer service center 800 is connected to the EMS 30 so that the home appliances 1 connected through wires in the consumer can be repaired if the home appliances 1 operate abnormally. In this way, a customer service system is constructed for home appliances according to an embodiment.

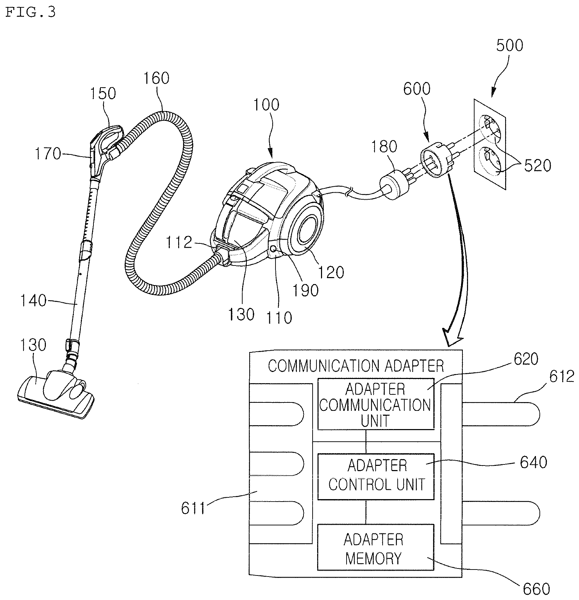

That is, according to the embodiment, in the customer service system for the home appliances 1, the AMI 20, the EMS 30, and the customer service center 800 are connected to each other for two-way communication. In addition, the home appliances 1 are is connected to the EMS 30 through communication adaptors 600 (described later in detail with reference to Fig. 3) for two-way communication.

Thus, operational information of the home appliances 1 can be transmitted to the customer service center 800 through the above-described communication path, and then the customer service center 800 checks the information and sends information about received customer requests to the home appliances 1 through the EMS 30. In this way, the customer service system for the home appliances 1 can be operated using the smart grid.

Identification codes of the home appliances 1 connected to the EMS 30 are registered in the EMS 30, and when a customer service is requested, the identification code of a corresponding home appliance 1 is transmitted to the customer service center 800 together with operational information of the home appliance 1.

Since EMSs 30 are provided in customers such as residential customers and offices, home codes for management may be assigned to the EMSs 30, respectively.

That is, when a service request of a home appliance 1 is transmitted to the customer service center 800 through an EMS 30, the home code of the EMS 30 and the identification code of the home appliance 1 are transmitted to the customer service center 800 and stored in the customer service center 800.

Hereinafter, an embodiment will be described in detail with reference to the accompanying drawings.

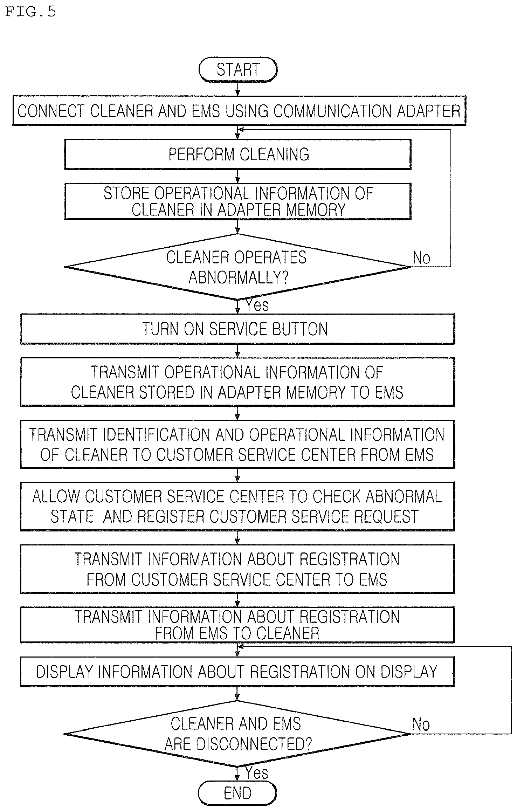

Fig. 3 is a view illustrating a home appliance according to an embodiment; Fig. 4 is a view illustrating a service system for the home appliance illustrated in Fig. 3; and Fig. 5 is a flowchart for explaining processes of receiving a customer's service request in the service system illustrated in Fig. 4.

In the drawings, a cleaner 100 is illustrated as an example of home the appliances 1.

The cleaner 100 includes a nozzle 130 through which air containing dust is drawn; a handle 150 with which a user can handle the cleaner 100; an extension pipe 140 connecting the nozzle 130 to the handle 150; and a connection hose 160 connecting the nozzle 130 and a main body 110 of the cleaner 100 for guiding air and dust to the main body 110.

The main body 110 includes a suction part 112 for suctioning air together with dust, and the connection hose 160 is coupled to the suction part 112.

A dust collector 130 may be detachably disposed in the main body 110 for collecting dust and other substances from air sucked through the suction part 112 and storing the dust and the other substances, and wheels 120 may be provided on left and right sides of the main body 110 so that a user can easily carry out a cleaning operation while moving the main body 110 by holding the handle 150.

In addition, a communication adapter 600 is connected to a plug 180 of the main body 110 of the cleaner 100 so that power supply to the main body 110 and two-way communication between the cleaner 100 and the EMS 30 can be possible.

That is, the communication adapter 600 is connected between the plug 180 and a socket 520 of an outlet 500 connected to the energy supply network 10 to allow power supply and two-way communication.

In detail, the communication adapter 600 includes: a first coupling part 611 corresponding to the plug 180 for fitting the plug 180 in the first coupling part 611; and a second coupling part 612 corresponding to the socket 520 so as to be fitted into the socket 520. Thus, the cleaner 100 can be connected to the energy supply network 10 through the communication adapter 600.

In addition, the communication adapter 600 includes: an adapter memory 660 for storing operational information of the cleaner 100; an adapter communication unit 620 communicating with the communication unit 34 of the EMS 30 and the cleaner 100 for transmitting and receiving the operational information; and an adapter control unit 640.

For this, the plug 180 of the cleaner 100 may include a data terminal in addition to a power terminal, and the first coupling part 611 may have a shape corresponding to the shape of the data terminal. Alternatively, a power management communication chip may be included in the cleaner 100 for transmitting and receiving operational information and power information to and from the adapter communication unit 620 and the communication unit 34 of the EMS 30.

If the cleaner 100 and the energy supply network 10 are connected through the communication adapter 600 as described above and the cleaner 100 is started, information such as the RPM and power consumption of a suction motor of the cleaner 100 is checked and stored in the adapter memory 660. For this, an encoder may be further included in the main body 110 for detecting the RPM of the suction motor, and values measured by the encoder may be stored in the adapter memory 660.

In addition, the main body 110 further includes a service button 190 for transmitting operational information stored in the adapter memory 660 to a cleaner customer service center 810 through the EMS 30.

If the cleaner 100 operates abnormally, a user can press the service button 190. On the contrary, when the cleaner 100 operates normally, it is unnecessary to press the service button 190. Thus, the service button 190 may be provided on a side of the main body 110 instead of being provided on the handle 150.

A display unit is provided on the handle 150 for displaying reception information transmitted from the cleaner customer service center 810 in response to a customer service request transmitted by pressing the service button 190.

For this, the display unit may include a display 170 configured by a liquid crystal panel capable of displaying characters, and may display information such as an estimated defective part, an estimated repair cost, an estimated repair time, and the closest service center location.

Hereinafter, an exemplary operation will now be explained according to an embodiment.

The cleaner 100 may be operated as follows: the communication adapter 600 is coupled to the plug 180; and the communication adapter 600 is inserted into the outlet 500 connected to the energy supply network 10 provided in a residential customer so as to connect the cleaner 100 to the EMS 30.

After the EMS 30 and the cleaner 100 are connected, the EMS 30 selects one of power supply sources according to energy supply mode, and then power is distributed to the cleaner 100 from the selected power source under the control of the EMS 30.

Then, a user can clean a desired place while handling the cleaner 100 with the handle 150, and during cleaning after the EMS 30 and the cleaner 100 are connected, information about operations of the cleaner 100 is stored in the adapter memory 660.

In a state where the cleaner 100 and the EMS 30 are correctly connected, if a user detects an abnormal situation such as a suction force decrease or a motor stop, the user can press the service button 190 provided on the main body 110 to send a service request for the cleaner 100 to the cleaner customer service center 810.

That is, if the service button 190 is pressed, information about operations of the cleaner 100 is transmitted from the adapter memory 660 of the communication adapter 600 to the EMS 30.

Then, the EMS 30 transmits the information to the cleaner customer service center 810 together with the identification code of the cleaner 100 so that the cleaner customer service center 810 can check the information and the identification code for determining whether the cleaner 100 operates abnormally.

In response to the customer service request, the cleaner customer service center 810 checks the home code of the EMS 30, the identification code of the cleaner 100, and the operational information of the cleaner 100 and registers the customer service request. Then, the cleaner customer service center 810 sends information about reception of the customer service request to the EMS 30.

The reception information transmitted from the cleaner customer service center 810 to the EMS 30 may include information such as an estimated defective part, an estimated repair cost, an estimated repair time, and the closest service center location.

After receiving the reception information, the EMS 30 transmits the reception information to the cleaner 100 through the communication adapter 600, and the reception information is displayed on the display 170 of the cleaner 100. Thus, a user can be easily informed and receive a service.

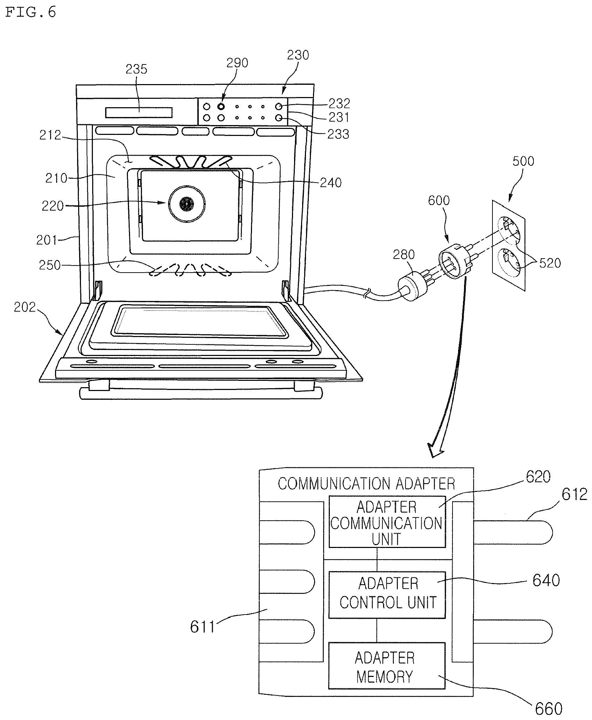

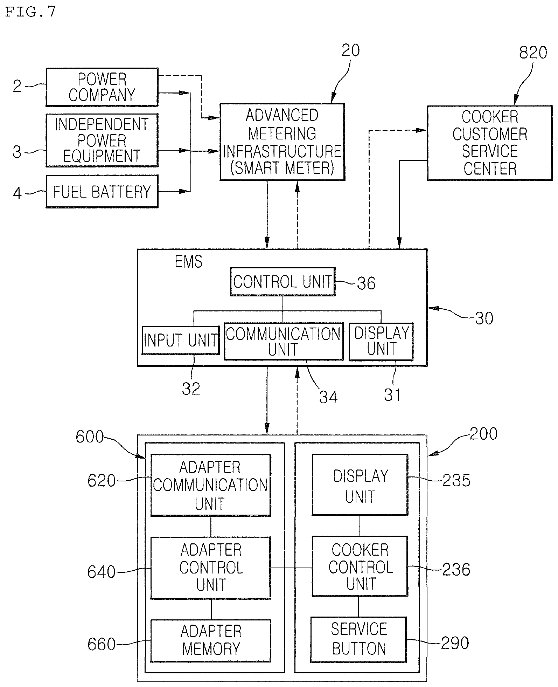

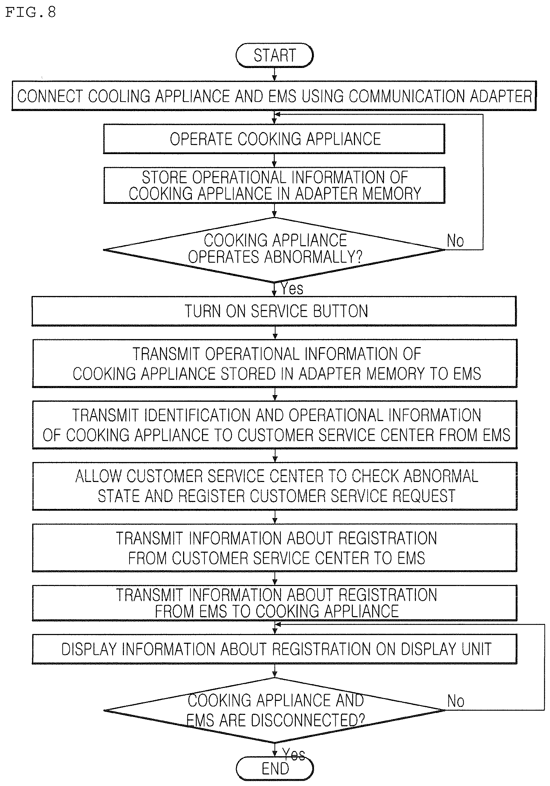

Fig. 6 is a view illustrating another home appliance according to an embodiment; Fig. 7 is a view illustrating a service system for the home appliance illustrated in Fig. 6; and Fig. 8 is a flowchart for explaining processes of receiving a customer's service request in the service system illustrated in Fig. 7.

In the drawings, a cooking appliance 200 is illustrated according to an embodiment.

The cooking appliance 200 includes an outer case 201 forming the exterior of the cooking appliance 200, a cavity 210 formed in the outer case 201 to define a cooling chamber 212, a door 202 for opening and closing the cavity 210, a plurality of heating devices for heating a food disposed in the cooling chamber 212, and a control panel 230 provided on a side of the outer case 201 so that a user can manipulate the control panel 230.

The cooking appliance 200 further includes a temperature detecting unit (not shown) for detecting the inside temperature of the cavity 210, a cooker control unit 236 for controlling the overall operation of the cooking appliance 200, and a cooker memory unit (not shown) for storing operational conditions of the cooking appliance 200.

That is, in the cooking appliance 200, the cooker control unit 236 may generate a control signal for selecting one of the heating devices and time according to the kind of food disposed in the cooling chamber 212, or a user may manipulate the control panel 230 to select a control signal to be generated.

As shown in Fig. 6, the cooling chamber 212 may include an upper heater 240, a lower heater 250, and a convection device 220 as heating devices. In addition, the cooling chamber 212 may further include a magnetron or an ultrasonic device as a heating device.

The control panel 230 includes: a manipulation unit 231 through which operational conditions of a heating device can be input; and a display unit 235 for displaying operational states of the cooking appliance 200.

The manipulation unit 231 includes: a mode selection button 232 for selecting a heating device operation mode for cooking a food in the cooling chamber 212; a start button 233 for starting in the selected operation mode; and a service button 290 that can be pressed when the cooking appliance 200 operates abnormally so as to send a service request to a cooker customer service center 820.

The display unit 235 may display operational states of the cooking appliance 200 controlled through the manipulation unit 231 and information about a customer service request transmitted to the cooker customer service center 820 through the service button 290.

Like the previous embodiment, a communication adapter 600 may be connected to a plug 280 of the cooking appliance 200 so that power supply to the cooking appliance 200 and two-way communication between the cooking appliance 200 and the EMS 30 can be possible.

That is, the communication adapter 600 is connected between the plug 280 and a socket 520 of an outlet 500 connected to the energy supply network 10 to allow power supply and two-way communication.

The communication adapter 600 includes: a first coupling part 611 corresponding to the plug 280 for fitting the plug 280 in the first coupling part 611; and a second coupling part 612 corresponding to the socket 520 so as to be fitted into the socket 520. Thus, the cooking appliance 200 can be connected to the energy supply network 10 through the communication adapter 600.

The communication adapter 600 includes: an adapter memory 660 for storing operational information of the cooking appliance 200; an adapter communication unit 620 communicating with the communication unit 34 of the EMS 30 and the cooking appliance 200 for transmitting and receiving the operational information; and an adapter control unit 640.

For this, the plug 280 of the cooking appliance 200 may include a data terminal in addition to a power terminal, and the first coupling part 611 may have a shape corresponding to the shape of the data terminal. Alternatively, a power management communication chip may be included in the cooking appliance 200 for transmitting and receiving operational information and power information to and from the adapter communication unit 620 and the communication unit 34 of the EMS 30.

If the cooking appliance 200 and the energy supply network 10 are connected through the communication adapter 600 as described above and the cooking appliance 200 is operated, operational information such as heating device operational states and power consumption rates is checked and stored in the adapter memory 660.

If the service button 290 is pressed, the adapter control unit 640 transmits the operational information of the cooking appliance 200 stored in the adapter memory 660 to the EMS 30 through the adapter communication unit 620.

After receiving the operational information, the EMS 30 transmits the operational information to the cooker customer service center 820 together with the identification code of the cooking appliance 200 so that a cooker service request can be applied.

Hereinafter, an exemplary operation will be explained according to an embodiment.

A user may cook a food using the cooking appliance 200 as follows. The communication adapter 600 is coupled to the plug 280; and the communication adapter 600 is inserted into the outlet 500 connected to the energy supply network 10 provided in a residential customer so as to connect the cooking appliance 200 to the EMS 30.

After the EMS 30 and the cooking appliance 200 are connected, the EMS 30 selects one of power supply sources according to energy supply mode, and then power is distributed to the cooking appliance 200 from the selected power source under the control of the EMS 30.

Then, a user selects a cooling mode through the manipulation unit 231 of the cooking appliance 200 and presses a manipulation button to operate the cooking appliance 200 in the selected cooling mode. Then, one or more of the heating devices of the cooking appliance 200 are operated according to the selected cooking mode so that the food can be cooked while storing operational information of the cooking appliance 200 in the adapter memory 660.

If the cooking appliance 200 does not operate normally although a cooling command is input through the manipulation unit 231, a user can press the service button 290 provided on a side of the manipulation unit 231 to send a customer service request to the cooker customer service center 820.

In detail, if a user detects an abnormal operation of the cooking appliance 200 and presses the service button 290, the communication adapter 600 sends the operational information of the cooking appliance 200 stored in the adapter memory 660 to the EMS 30.

Then, the EMS 30 sends the operational information of the cooking appliance 200 to the cooker customer service center 820 together with the identification code of the cooking appliance 200 so that the cooker customer service center 820 can check the information and determine whether the cooking appliance 200 operates abnormally.

In response to the customer service request, the cooker customer service center 820 checks the home code of the EMS 30, the identification code of the cooking appliance 200, and the operational information of the cooking appliance 200, and registers the customer service request. Then, the cooker customer service center 820 sends information about reception of the customer service request to the EMS 30.

The reception information transmitted from the cooker customer service center 820 to the EMS 30 may include information such as an estimated defective part, an estimated repair cost, an estimated repair time, and the closest service center location.

After receiving the reception information, the EMS 30 transmits the reception information to the cooking appliance 200 through the communication adapter 600, and the reception information is displayed on the display unit 235 of the cooking appliance 200. Thus, a user can be easily informed and receive a service.

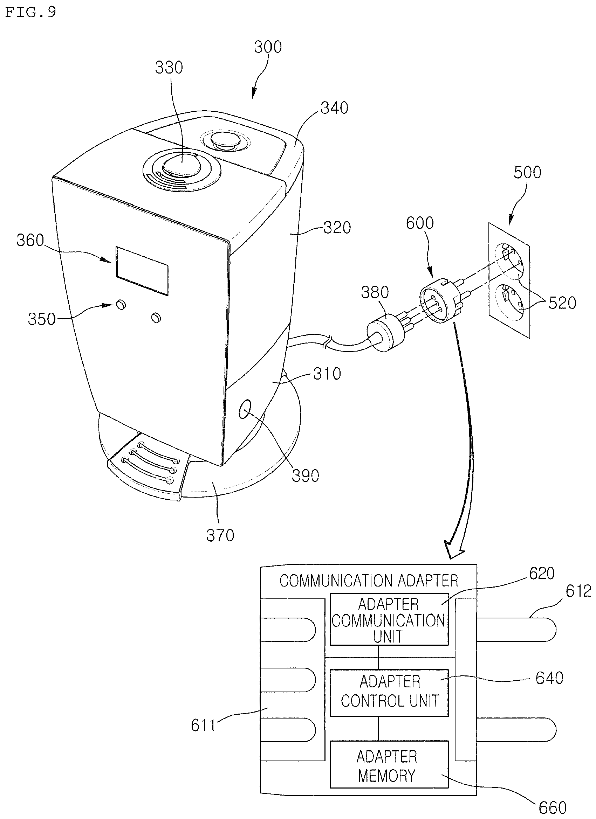

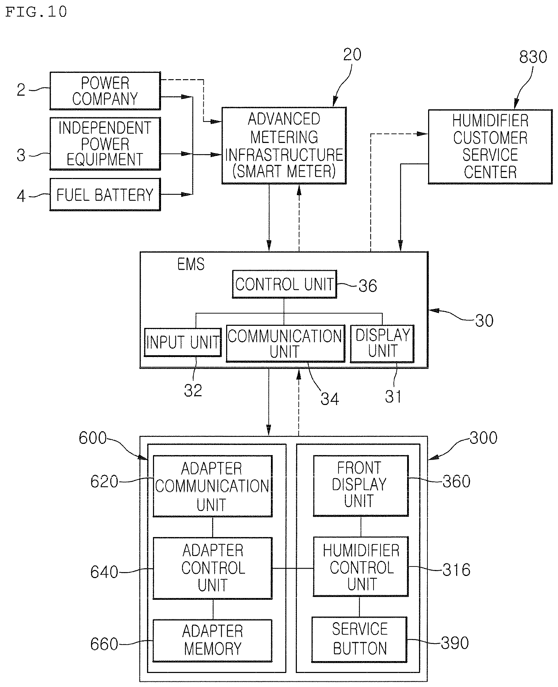

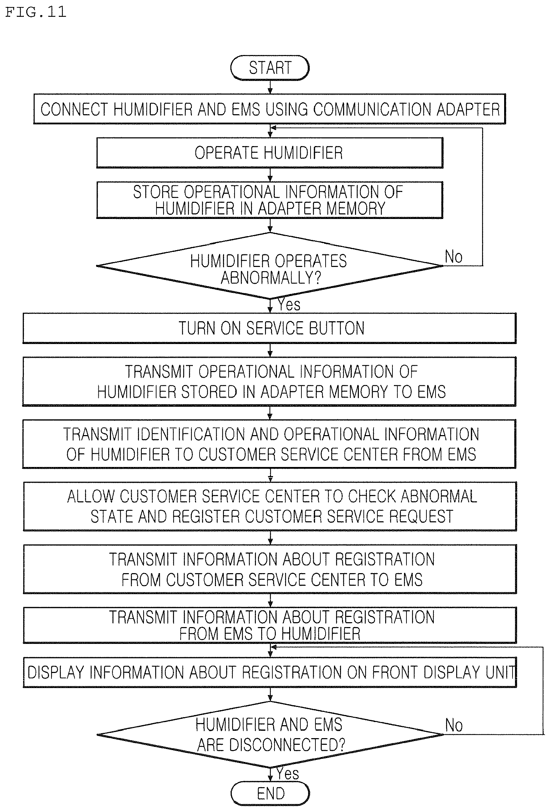

Fig. 9 is a view illustrating another home appliance according to an embodiment; Fig. 10 is a view illustrating a service system for the home appliance illustrated in Fig. 9; and Fig. 11 is a flowchart for explaining processes of receiving a customer's service request in the service system illustrated in Fig. 10.

In the drawings, a humidifier 300 is illustrated according to an embodiment.

The humidifier 300 includes a humidifier main body 310 and a water tank 320 disposed on the humidifier main body 310 to supply water. The humidifier main body 310 and the water tank 320 form the exterior of the humidifier 300.

The humidifier main body 310 includes a tub part (not shown) for containing water supplied from the water tank 320.

The tub part includes: a water level sensor for detecting the water level in the water tank 320; and a vibrator or a heating unit such as a heater or an electrode rod for producing wet steam from water supplied from the water tank 320.

Wet steam produced by the vibrator or the heating unit may be discharged to the outside through a wet steam outlet of the water tank 320, and the humidifier main body 310 may include a blower for facilitating discharging of the wet steam.

In addition, a spray guide 330 may be disposed on the water tank 320 to guide wet steam discharging from the water tank 320, and a water tank handle 340 is provided on a side of the water tank 320 so that a user can easily attach and detach the water tank 320 by holding the water tank handle 340.

The water tank 320 is disposed on the rear side of the humidifier main body 310 and forms the rear exterior of the humidifier 300.

A front display unit 360 is provided the front side of the humidifier main body 310 so that a user can check the operational state of the humidifier 300.

The front display unit 360 includes a liquid crystal panel capable of display letters and numerals. The front display unit 360 may display information about a customer service request sent by pressing a service button 390 (described later). The service button 390 may be provided on a rear lateral side of the humidifier main body 390 at a position spaced apart from an adjustor 350, and if necessary, a user can press the service button 390.

The adjustor 350 is provided at a side of the front display unit 360 to receive a control command for operating the humidifier 300.

That is, if a user input a control condition through the adjustor 350, a humidifier control unit 316 generates a control command for operating the vibrator or the heating unit and the blower corresponding to the control condition. In this way, indoor humidity can be controlled using the humidifier 300.

Like the previous embodiment, a communication adapter 600 may be connected to a plug 380 of the humidifier 300 so that power supply to the humidifier 300 and two-way communication between the humidifier 300 and the EMS 30 can be possible.

That is, the communication adapter 600 is connected between the plug 380 and a socket 520 of an outlet 500 connected to the energy supply network 10 to allow power supply and two-way communication.

The communication adapter 600 includes: a first coupling part 611 corresponding to the plug 380 for fitting the plug 380 in the first coupling part 611; and a second coupling part 612 corresponding to the socket 520 so as to be fitted into the socket 520. Thus, the humidifier 300 can be connected to the energy supply network 10 through the communication adapter 600.

The communication adapter 600 includes: an adapter memory 660 for storing operational information of the humidifier 300; an adapter communication unit 620 communicating with the communication unit 34 of the EMS 30 and the humidifier 300 for transmitting and receiving the operational information; and an adapter control unit 640.

For this, the plug 380 of the humidifier 300 may include a data terminal in addition to a power terminal, and the first coupling part 611 may have a shape corresponding to the shape of the data terminal. Alternatively, a power management communication chip may be included in the humidifier 300 for transmitting and receiving operational information and power information to and from the adapter communication unit 620 and the communication unit 34 of the EMS 30.

If the humidifier 300 and the energy supply network 10 are connected through the communication adapter 600 as described above and a control signal is input through the adjustor 350, information such as operational states and power consumption rates of the vibrator or the heating unit is checked and stored in the adapter memory 660.

If the service button 390 is pressed, the adapter control unit 640 transmits operational information of the humidifier 300 stored in the adapter memory 660 to the EMS 30 through the adapter communication unit 620.

After receiving the operational information, the EMS 30 transmits the operational information to a humidifier customer service center 830 together with the identification code of the humidifier 300 so that a humidifier service request can be applied.

Hereinafter, an exemplary operation will be explained according to an embodiment.

A user may improve indoor environments by using the humidifier 300 as follows. The communication adapter 600 is coupled to the plug 380; and the communication adapter 600 is inserted into the outlet 500 connected to the energy supply network 10 provided in a residential customer so as to connect the humidifier 300 to the EMS 30.

After the EMS 30 and the humidifier 300 are connected, the EMS 30 selects one of power supply sources according to energy supply mode, and then power is distributed to the humidifier 300 from the selected power source under the control of the EMS 30.

Then, a user sets conditions such as a spraying rate and time of wet steam using the adjustor 350 of the humidifier 300 for adjusting the humidity of an indoor area.

At this time, in the humidifier 300, the vibrator or the heating unit is operated to generate and spray wet steam according to an input control signal, and operational information of the humidifier 300 is stored in the adapter memory 660.

If the humidifier 300 does not operate normally although an operation command is input through the adjustor 350, a user may press the service button 390 to send a customer service request to the humidifier customer service center 830.

In detail, if a user detects an abnormal operation of the humidifier 300 and presses the service button 390, the communication adapter 600 sends the operational information of the humidifier 300 stored in the adapter memory 660 to the EMS 30.

Then, the EMS 30 sends the operational information of the humidifier 300 to the humidifier customer service center 830 together with the identification code of the humidifier 300 so that the humidifier customer service center 830 can check the information and determine whether the humidifier 300 operates abnormally.

In response to the customer service request, the humidifier customer service center 830 checks the home code of the EMS 30, the identification code of the humidifier 300, and the operational information of the humidifier 300, and registers the customer service request. Then, the humidifier customer service center 830 sends information about reception of the customer service request to the EMS 30.

The reception information transmitted from the humidifier customer service center 830 to the EMS 30 may include information such as an estimated defective part, an estimated repair cost, an estimated repair time, and the closest service center location.

After receiving the reception information, the EMS 30 transmits the reception information to the humidifier 300 through the communication adapter 600, and the reception information is displayed on the front display unit 360 of the humidifier 300. Thus, a user can be easily informed and receive a service.

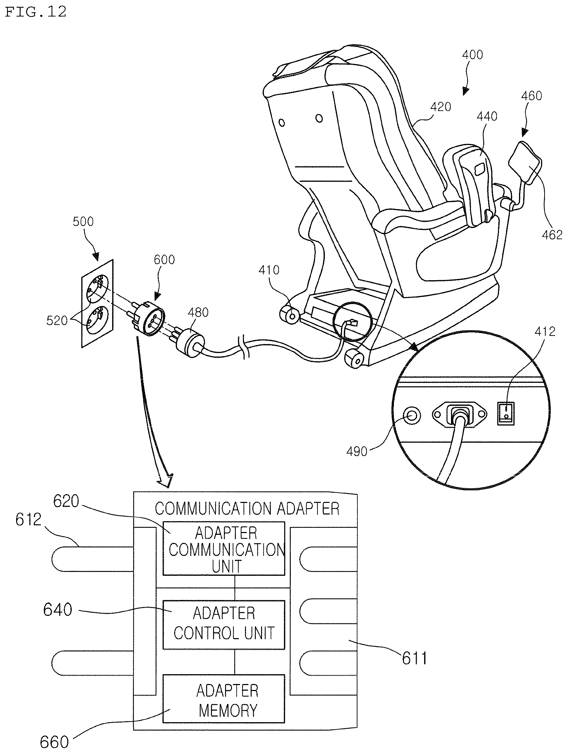

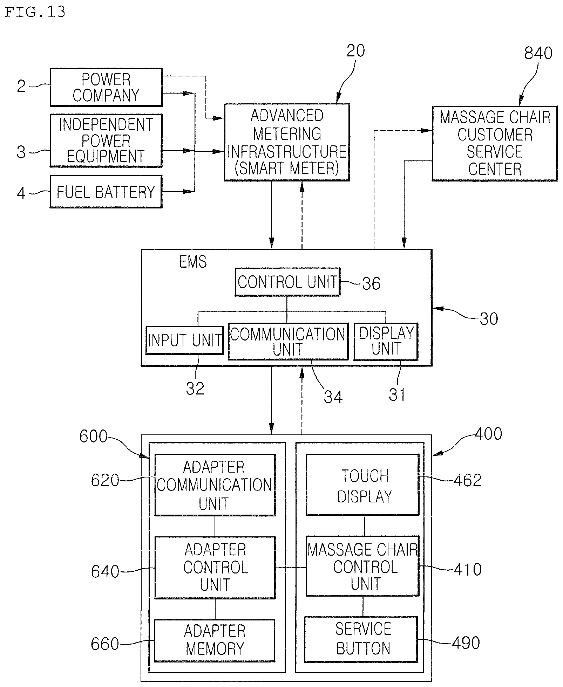

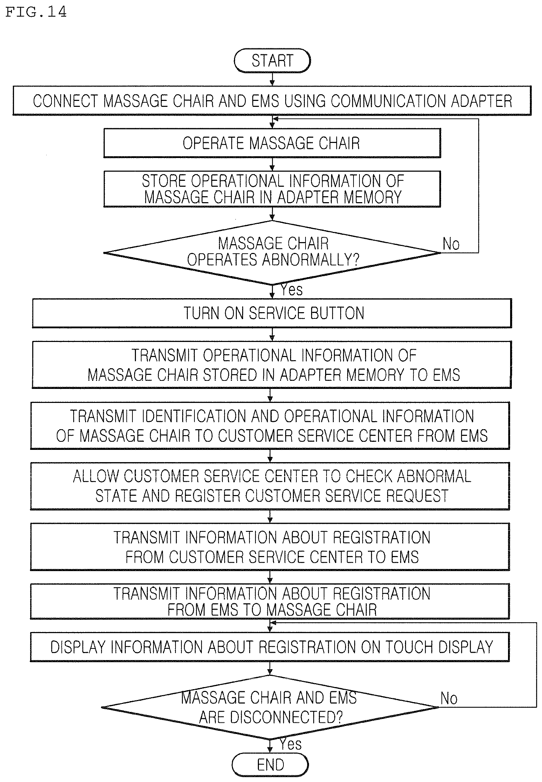

Fig. 12 is a view illustrating another home appliance according to an embodiment; Fig. 13 is a view illustrating a service system for the home appliance illustrated in Fig. 12; and Fig. 14 is a flowchart for explaining processes of receiving a customer's service request in the service system illustrated in Fig. 13.

In the drawings, a massage chair 400 is illustrated according to an embodiment.

The massage chair 400 is used to massage the body of a user. The body of a user can be massaged wholly or partially by using the massage chair 400, and for this, the massage chair 400 includes a plurality of motors and an air adjusting device connected to a plurality of air bags.

In detail, the massage chair 400 includes a back massage unit 420, an arm massage unit 440, leg and foot massage units (not shown). The massage units of the massage chair 400 may be individually controlled by the motors and the air adjusting device for massage parts of a user's body independently.

The back massage unit 420 and the feet massage unit (not shown) include a plurality of protrusions connected to the motors for being moved in various manners for massaging the back and feet of a user sit on the massage chair 400.

The arm massage unit 440 and the leg massage unit (not shown) include air bags that can be expanded and contracted by the air adjusting device for massaging the arms and legs of a user.

The massage chair 400 includes a remote controller 460 and a massage chair control unit 410. The massage units of the massage chair 400 can be used selectively or simultaneously by using the remote controller 460, and the massage chair control unit 410 sends control commands to the massage units according to selection through the remote controller 460.

The remote controller 460 is disposed on a side of the arm massage unit 440 so that a user sit on the massage chair 400 can easily see the remote controller 460, and the remote controller 460 includes a touch display 462 so that a user can easily check and select an operation mode.

Like the previous embodiment, the massage chair control unit 410 includes a plug 480, and the plug 480 can be connected to the EMS 30 using a communication adapter 600 for receiving power while communicating with the EMS 30.

In addition, the massage chair control unit 410 includes a service button 490 so that if the massage chair 400 operates abnormally, a user can press the service button 490 to send a customer service request to a massage chair customer service center 840 through the EMS 30. A power button 412 may be provided at a side of the service button 490 for turning the massage chair 400 on and off.

A button having the same function as the service button 490 may be provided on the touch display 462 of the remote controller 460. However, in the current embodiment, only the service button 490 is provided at a side of the massage chair control unit 410 to prevent a service request caused by a mistake. If necessary, a user can send a service request using the service button 490.

The communication adapter 600 connects the plug 480 to a socket 520 of an outlet 500 connected to the energy supply network 10 so that power supply and two-way communication can be possible.

The communication adapter 600 includes: a first coupling part 611 corresponding to the plug 480 for fitting the plug 480 in the first coupling part 611; and a second coupling part 612 corresponding to the socket 520 so as to be fitted into the socket 520. Thus, the massage chair 400 can be connected to the energy supply network 10 through the communication adapter 600.

The communication adapter 600 includes: an adapter memory 660 for storing operational information of the massage chair 400; an adapter communication unit 620 communicating with the communication unit 34 of the EMS 30 and the massage chair 400 for transmitting and receiving the operational information; and an adapter control unit 640.

For this, the plug 480 of the massage chair 400 may include a data terminal in addition to a power terminal, and the first coupling part 611 may have a shape corresponding to the shape of the data terminal. Alternatively, a power management communication chip may be included in the humidifier 300 for transmitting and receiving operational information and power information to and from the adapter communication unit 620 and the communication unit 34 of the EMS 30.

If the massage chair 400 and the energy supply network 10 are connected through the communication adapter 600 as described above and a control signal is input through the remote controller 460, operational information such as operation states and power consumption rates of the motors and/or the air adjusting device is input through the remote controller 460 is checked and stored in the adapter memory 660.

If the service button 490 is pressed, the adapter control unit 640 transmits the operational information of the massage chair 400 stored in the adapter memory 660 to the EMS 30 through the adapter communication unit 620.

After receiving the operational information, the EMS 30 transmits the operational information to the massage chair customer service center 840 together with the identification code of the massage chair 400 so that a massage chair service request can be applied.

Hereinafter, an exemplary operation will be explained according to an embodiment.

A user may massage a part or all parts of his body by using the massage chair 400 as follows. The communication adapter 600 is coupled to the plug 480; and the communication adapter 600 is inserted into the outlet 500 connected to the energy supply network 10 provided in a residential customer so as to connect the massage chair 400 to the EMS 30.

After the EMS 30 and the massage chair 400 are connected, the EMS 30 selects one of power supply sources according to energy supply mode, and then power is distributed to the massage chair 400 from the selected power source under the control of the EMS 30.

Then, a user can set conditions such as a part to be massaged and a massage time using the remote controller 460, and enjoy massage according to the set conditions.

At this time, in the massage chair 400, operational information of the motors and the air adjusting device is stored in the adapter memory 660 according to an input control signal.

If the massage chair 400 does not operate normally although an operation command is input through the remote controller 460, a user may press the service button 490 to send a customer service request to the humidifier chair customer service center 840.

In detail, if a user detects an abnormal operation of the massage chair 400 and presses the service button 490, the communication adapter 600 sends the operational information of the massage chair 400 stored in the adapter memory 660 to the EMS 30.

Then, the EMS 30 sends the operational information of the massage chair 400 to the massage chair customer service center 840 together with the identification code of the massage chair 400 so that the massage chair customer service center 840 can check the information and determine whether the massage chair 400 operates abnormally.

In response to the customer service request, the massage chair customer service center 840 checks the home code of the EMS 30, the identification code of the humidifier 300, and the operational information of the humidifier 300, and registers the customer service request. Then, the massage chair customer service center 840 sends information about reception of the customer service request to the EMS 30.

The reception information transmitted from the massage chair customer service center 840 to the EMS 30 may include information such as an estimated defective part, an estimated repair cost, an estimated repair time, and the closest service center location.

After receiving the reception information, the EMS 30 transmits the reception information to the massage chair 400 through the communication adapter 600, and the reception information is displayed on the touch display 462 of the massage chair 400. Thus, a user can be easily informed and receive a service.

### INDUSTRIAL APPLICABILITY

Most customers buy home appliances after considering the quality of customer services.

That is, when customers buy home appliances, they check service quality in addition to the performances and prices of the home appliances. According to the embodiments, when a home appliance operates abnormally, it is possible for a user to send a customer service request only by pressing a service button provided on a side of the home appliance without having to visit a customer service center.

Therefore, when a user wants to repair a home appliance, it is unnecessary for the user to search for a customer service center, visit the customer service center, wait in line, and explain abnormal states of the home appliance for receiving a repair service. This makes customers buy products and satisfies customers, thereby increasing industrial applicability and improving related industries.

## Claims

1. A customer service system for a home appliance (1) using a smart grid, the customer service system comprising:
an AMI (advanced metering infrastructure) (20) configured to measure and display power information in real time while communicating with a power supply source in two ways;
an EMS (energy management system)(30) connected to the AMI (20) for supplying power to the home appliance (1) based on external power information; and
a customer service center (800) providing a customer service for the home appliance (1) and communicating with the EMS (30) in two ways;
**characterized in that** the customer service system further comprises:
a communication adapter (600) connecting the home appliance (1) and the EMS (20) while allowing power supply and two-way communication,
wherein the home appliance (1) comprises a service button (190, 290, 390, 490), and if the service button (190, 290, 390, 490) is manipulated, information for requesting a customer service is transmitted to the customer service center (800) through the communication adapter (600) and the EMS (20).

2. The customer service system according to claim 1, wherein the home appliance (1) further comprises a display unit (170, 235, 360, 462) for displaying information about the customer service registered in the customer service center after the customer service is requested using the service button (190).

3. The customer service system according to claim 1, wherein the home appliance comprises a main body (110);
the main body (110) further comprises a display unit (170) for displaying information about the customer service registered in the customer service center after the customer service is requested using the service button (190).

4. The customer service system according to claim 3, wherein the display unit (170) displays at least one of an estimated defective part, an estimated repair cost, an estimated repair time, and a closest service center location.

5. The customer service system according to claim 1, wherein when the request for customer service is sent to the customer service center (810), information about a previous operation of the home appliance (1) and an identification code of the home appliance (1) are also sent.

6. The customer service system according to claim 1, wherein the communication adapter (600) further comprises:
a first coupling part (611) connected to the plug (280);
a second coupling part (612) coupled to an outlet; and
an adapter memory (660) for storing operational information of the home appliance (1).

7. The customer service system according to claim 6, wherein the plug (280) comprises a power terminal and a data terminal for transmitting and receiving data.

8. The customer service system according to claim 5, wherein the main body (110) further comprises a communication unit for communicating with the communication adapter.

9. The customer service system according to claim 1, wherein a main body (110) of the home appliance (1) comprises a communication unit.

10. The customer service system according to claim 3, wherein the home appliance (1) is a vacuum cleaner (100), and the display unit (170) is provided at a side of a handle (150) of the vacuum cleaner (100).

11. The customer service system according to claim 3, wherein the home appliance (1) is a cooking appliance (200) comprising a control panel (230) for receiving an operation command and displaying operational information, and the display unit (235) and the service button (290) are provided at the control panel (230).

12. The customer service system according to claim 3, wherein the home appliance (1) is a humidifier (300), and the display unit (360) further displays operational information of the humidifier (300).

13. The customer service system according to claim 3, wherein the home appliance (1) is a massage chair (400) comprising a touch screen (462) for displaying operational information of the massage chair (400) and receiving an operation command,
wherein the display unit (462) is the touch screen (462), and the service button (490) is provided at a position spaced apart from the touch screen (462).

## Patentansprüche

1. Kundenservicesystem für ein Hausgerät (1), das ein intelligentes Versorgungsnetz nutzt, wobei das Kundenservicesystem aufweist:
eine AMI (Advanced-Metering-Infrastruktur) (20), die so konfiguriert ist, dass sie Strominformationen in Echtzeit misst und anzeigt, während sie mit einer Stromversorgungsquelle auf zwei Wegen kommuniziert;
ein mit der AMI (20) verbundenes EMS (Energiemanagementsystem) (30) zum Versorgen des Hausgeräts (1) mit Strom auf der Grundlage von externen Strominformationen; und
eine Kundenservicezentrale (800) zum Bereitstellen eines Kundenservices für das Hausgerät (1) und Zwei-Wege-Kommunizieren mit dem EMS (30);
**dadurch gekennzeichnet, dass** das Kundenservicesystem ferner aufweist:
einen Kommunikationsadapter (600), der das Hausgerät (1) und das EMS (20) verbindet, während er Stromversorgung und Zwei-Wege-Kommunikation ermöglicht, wobei das Hausgerät (1) ferner eine Servicetaste (190, 290, 390, 490) aufweist und bei Betätigung der Servicetaste (190, 290, 390, 490) Informationen zum Anfordern eines Kundenservices zur Kundenservicezentrale (800) über den Kommunikationsadapter (600) und das EMS (20) gesendet werden.

2. Kundenservicesystem nach Anspruch 1, wobei das Hausgerät (1) ferner eine Anzeigeeinheit (170, 235, 360, 462) zum Anzeigen von Informationen über den Kundenservice aufweist, der in der Kundenservicezentrale registriert ist, nachdem der Kundenservice mit Hilfe der Servicetaste (190) angefordert wird.

3. Kundenservicesystem nach Anspruch 1, wobei das Hausgerät einen Hauptkörper (110) aufweist;
der Hauptkörper (110) ferner eine Anzeigeeinheit (170) zum Anzeigen von Informationen über den Kundenservice aufweist, der in der Kundenservicezentrale registriert ist, nachdem der Kundenservice mit Hilfe der Servicetaste (190) angefordert wird.

4. Kundenservicesystem nach Anspruch 3, wobei die Anzeigeeinheit (170) ein voraussichtlich defektes Teil, einen Reparaturkostenvoranschlag, eine geschätzte Reparaturzeit und/oder einen nächstgelegenen Servicezentralenstandort anzeigt.

5. Kundenservicesystem nach Anspruch 1, wobei beim Senden der Kundenserviceanforderung zur Kundenservicezentrale (810) auch Informationen über einen vorherigen Betrieb des Hausgeräts (1) und ein Kenncode des Hausgeräts (1) gesendet werden.

6. Kundenservicesystem nach Anspruch 1, wobei der Kommunikationsadapter (600) ferner aufweist:
ein erstes Koppelteil (611), das mit dem Stecker (280) verbunden ist;
ein zweites Koppelteil (612), das mit einer Steckdose verbunden ist; und
einen Adapterspeicher (660) zum Speichern von Betriebsinformationen des Hausgeräts (1).

7. Kundenservicesystem nach Anspruch 6, wobei der Stecker (280) einen Stromanschluss und einen Datenanschluss zum Senden und Empfangen von Daten aufweist.

8. Kundenservicesystem nach Anspruch 5, wobei der Hauptkörper (110) ferner eine Kommunikationseinheit zum Kommunizieren mit dem Kommunikationsadapter aufweist.

9. Kundenservicesystem nach Anspruch 1, wobei ein Hauptkörper (110) des Hausgeräts (1) eine Kommunikationseinheit aufweist.

10. Kundenservicesystem nach Anspruch 3, wobei das Hausgerät (1) ein Staubsauger (100) ist und die Anzeigeeinheit (170) an einer Seite eines Griffs (150) des Staubsaugers (100) vorgesehen ist.

11. Kundenservicesystem nach Anspruch 3, wobei das Hausgerät (1) ein Kochgerät (200) mit einem Bedienfeld (230) zum Empfangen eines Betriebsbefehls und Anzeigen von Betriebsinformationen ist und die Anzeigeeinheit (235) und die Servicetaste (290) am Bedienfeld (230) vorgesehen sind.

12. Kundenservicesystem nach Anspruch 3, wobei das Hausgerät (1) ein Befeuchter (300) ist und die Anzeigeeinheit (360) ferner Betriebsinformationen des Befeuchters (300) anzeigt.

13. Kundenservicesystem nach Anspruch 3, wobei das Hausgerät (1) ein Massagesessel (400) mit einem Touchscreen (462) zum Anzeigen von Betriebsinformationen des Massagesessels (400) und Empfangen eines Betriebsbefehls ist,
wobei die Anzeigeeinheit (462) der Touchscreen (462) ist und die Servicetaste (490) an einer vom Touchscreen (462) beabstandeten Position vorgesehen ist.

## Revendications

1. Système de service après-vente pour un appareil domestique (1) utilisant un réseau intelligent, le système de service après-vente comprenant :
une AMI (infrastructure de comptage avancée) (20) configurée pour mesurer et afficher des informations d'énergie en temps réel tout en communiquant avec une source d'alimentation électrique dans les deux sens ;
un EMS (système de gestion d'énergie) (30) connecté à l'AMI (20) pour fournir de l'énergie à l'appareil domestique (1) sur la base d'informations d'énergie externes ; et
un centre de service après-vente (800) fournissant un service après-vente pour l'appareil domestique (1) et communiquant avec l'EMS (30) dans les deux sens ;
**caractérisé en ce que** le système de service après-vente comprend en outre :
un adaptateur de communication (600) connectant l'appareil domestique (1) et l'EMS (20) tout en permettant une alimentation électrique et une communication bidirectionnelle,
dans lequel l'appareil domestique (1) comprend un bouton de service (190, 290, 390, 490), et si le bouton de service (190, 290, 390, 490) est manipulé, des informations pour une demande d'un service après-vente sont transmises au centre de service après-vente (800) par le biais de l'adaptateur de communication (600) et de l'EMS (20).

2. Système de service après-vente selon la revendication 1, dans lequel l'appareil domestique (1) comprend en outre une unité d'affichage (170, 235, 360, 462) pour afficher des informations concernant le service après-vente enregistré dans le centre de service après-vente après que le service après-vente est demandé en utilisant le bouton de service (190).

3. Système de service après-vente selon la revendication 1, dans lequel l'appareil domestique comprend un corps principal (110) ;
le corps principal (110) comprend en outre une unité d'affichage (170) pour afficher des informations concernant le service après-vente enregistré dans le centre de service après-vente après que le service après-vente est demandé en utilisant le bouton de service (190).

4. Système de service après-vente selon la revendication 3, dans lequel l'unité d'affichage (170) affiche au moins un parmi une pièce défectueuse estimée, un coût de réparation estimé, un temps de réparation estimé et une position de centre de service le plus proche.

5. Système de service après-vente selon la revendication 1, dans lequel quand la demande pour un service après-vente est envoyée au centre de service après-vente (810), des informations concernant un fonctionnement précédent de l'appareil domestique (1) et un code d'identification de l'appareil domestique (1) sont également envoyés.

6. Système de service après-vente selon la revendication 1, dans lequel l'adaptateur de communication (600) comprend en outre :
une première partie de couplage (611) connectée à la fiche (280) ;
une deuxième partie de couplage (612) couplée à une prise ; et
une mémoire d'adaptateur (660) pour stocker des informations de fonctionnement de l'appareil domestique (1).

7. Système de service après-vente selon la revendication 6, dans lequel la fiche (280) comprend une borne d'alimentation et une borne de données pour transmettre et recevoir des données.

8. Système de service après-vente selon la revendication 5, dans lequel le corps principal (110) comprend en outre une unité de communication pour communiquer avec l'adaptateur de communication.

9. Système de service après-vente selon la revendication 1, dans lequel un corps principal (110) de l'appareil domestique (1) comprend une unité de communication.

10. Système de service après-vente selon la revendication 3, dans lequel l'appareil domestique (1) est un aspirateur (100), et l'unité d'affichage (170) est disposée sur un côté d'une poignée (150) de l'aspirateur (100).

11. Système de service après-vente selon la revendication 3, dans lequel l'appareil domestique (1) est un appareil de cuisson (200) comprenant un panneau de commande (230) pour recevoir une commande de fonctionnement et afficher des informations de fonctionnement, et l'unité d'affichage (235) et le bouton de service (290) sont disposés au niveau du panneau de commande (230).

12. Système de service après-vente selon la revendication 3, dans lequel l'appareil domestique (1) est un humidificateur (300) et l'unité d'affichage (360) affiche en outre des informations de fonctionnement de l'humidificateur (300).

13. Système de service après-vente selon la revendication 3, dans lequel l'appareil domestique (1) est un fauteuil de massage (400) comprenant un écran tactile (462) pour afficher des informations de fonctionnement du fauteuil de massage (400) et recevoir une commande de fonctionnement,
dans lequel l'unité d'affichage (462) est l'écran tactile (462) et le bouton de service (490) est disposé dans une position espacée de l'écran tactile (462).
